# EUROPEAN PATENT SPECIFICATION

(11) **EP 2 060 339 B1**
(45) Date of publication and mention of the grant of the patent: **18.04.2012**
(21) Application number: 09001971.2
(22) Date of filing: 15.10.2004
(51) Int. Cl.: B22C 9/10, B22C 9/04

(54) **Refractory metal core**
Hochschmelzender Metallkern
Noyau métallique réfractaire

(30) Priority: 15.10.2003 US 685632
(43) Date of publication of application: 20.05.2009
(62) Divisional of application: 04256374.2
(73) Proprietor: United Technologies Corporation, Hartford, CT 06101 (US)
(72) Inventor: Beals, James T., West Hartford, CT 06107 (US); Snyder, Jacob, Painesville, OH 44077 (US); Shah, Dilip M., Glastonbury, CT 06033 (US); Wiedemer, John, Glastonbury, CT 06033 (US)
(74) Representative: Leckey, David Herbert

(56) References cited:
- EP-A- 0 084 234
- EP-A- 1 306 147
- EP-A- 1 358 954
- US-A- 3 957 104
- US-A- 4 836 268
- PATENT ABSTRACTS OF JAPAN vol. 1999, no. 08, 30 June 1999 (1999-06-30) & JP 11 057943 A (EBARA CORP), 2 March 1999 (1999-03-02)

## Description

### BACKGROUND OF THE INVENTION

The present invention relates to a refractory metal core for use in a casting system.

Refractory metal cores (RMCs) are metal based casting cores usually composed of molybdenum with a protective coating. The refractory metal provides more ductility than conventional ceramic core materials while the coating (usually ceramic) protects the refractory metal from oxidation during the shell fire step of the investment casting process and prevents dissolution of the core from molten metal. RMCs have shown significant promise in casting feature sizes and geometries not attainable with ceramic cores.

One method of using refractory metal cores is shown in U.S. Published Patent Application No. 2003/0075300, entitled "CORES FOR USE IN PRECISION INVESTMENT CASTING", to Shah et al.

Currently, many gas path component designs are being considered that use a refractory metal core in conjunction with a ceramic core. The ceramic core has many benefits that favor its use in larger sections. Typically, the refractory metal has attached to the ceramic core and has been employed for small feature sizes and complex geometry due to its increased ductility.

Blade outer air seals (BOAS) and low pressure turbine (LPT) blades are two components that may not require large cooled sections but could benefit from either improved cooling or lower cost potential afforded by RMC technology.

### SUMMARY OF THE INVENTION

Accordingly, it is an object of the present invention to provide a refractory metal core which may be used in the casting of gas turbine engine components such as BOAS, LPT blades, and turbine airfoils.

The present invention provides a refractory metal core as claimed in claim 1.

Other details of the refractory metal core, as well as other advantages attendant thereto, are set forth in the following detailed description and the accompanying drawings wherein like reference numerals depict like elements.

### BRIEF DESCRIPTION OF THE DRAWINGS

Figures 1 to 5 represent arrangements that are outside the scope of claim 1.
FIG. 1 is a schematic representation of a refractory metal core for forming a turbine engine component having cooling features;
FIG. 2 is a schematic representation of a second arrangement of a refractory metal core for forming a turbine engine component with cooling features;
FIG. 3 is a schematic representation of a two piece refractory metal core for forming a turbine engine component;
FIG. 4 is a schematic representation of a solid refractory metal forging for forming a turbine engine component;
FIG. 5 illustrates a refractory metal core in the form of a balloon or pillow structure; and
FIG. 6 illustrates a refractory metal core in accordance with the invention having a honeycomb shape.

### DETAILED DESCRIPTION OF THE PREFERRED EMBODIMENT(S)

As previously mentioned, a casting system for forming turbine engine components such as BOAS and LPT blades is described below. The casting system may be used to provide the gas turbine engine component with cooling features if desired.

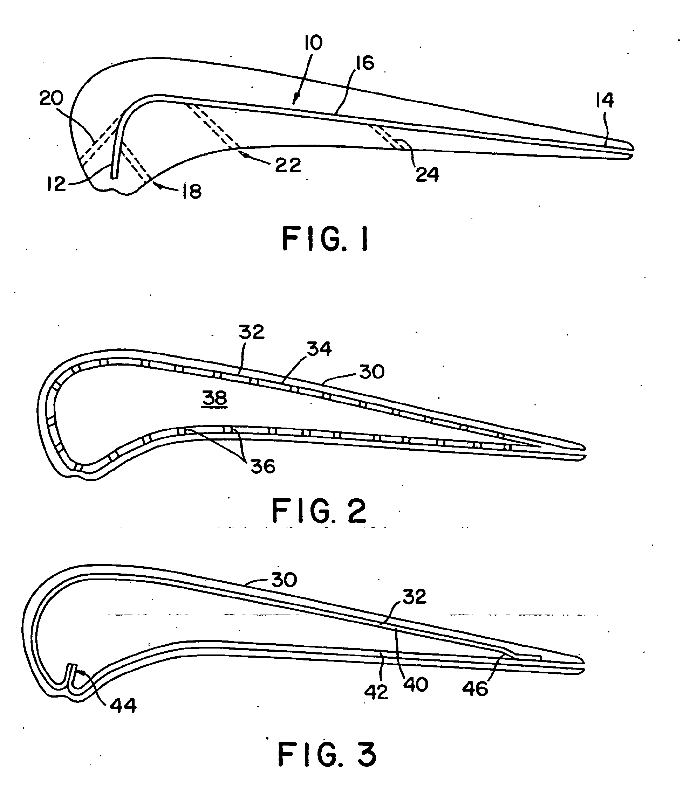

FIG. 1 illustrates a first arrangement of a casting system, which is outside the scope of claim 1. In this embodiment, a refractory metal core 10 is used. The core 10 is formed from a metal sheet of refractory metal selected from the group consisting of molybdenum, tantalum, tungsten, niobium, alloys thereof, and mixtures thereof. One material which may be used for the core 10 is a molybdenum-rhenium alloy. Preferably, the refractory core 10 is coated with a ceramic material such as an oxide coating.

The core 10 has a leading edge portion 12, a trailing edge portion 14, and a central portion 16 extending between the leading edge portion 12 and the trailing edge portion 14. The core 10 may have a plurality of bent portions 18 and 20 in the vicinity of the leading edge portion 12. The bent portions 18 and 20 are used to form film cooling passageways. The core 10, if desired, may also have a plurality of bent portions 22 and 24 along the central portion 16 to form still other film cooling passageways. The number of bent portions and the location of the bent portions is a function of the gas turbine engine component being formed and the need for providing film cooling on the surfaces of the component.

If desired, other features may be provided by cutting out portions of the metal sheet forming the core 10.

Referring now to FIG. 2, and describing an arrangement outside the scope of claim 1, the casting system includes an outer wall 30 formed from a metal or metal alloy such as a nickel based superalloy. To provide cooling features, a skin core 32 is formed from a sheet of refractory material and is positioned adjacent to an internal surface 34 of the wall 30. The sheet forming the core 32 may be made from any of the refractory materials listed hereinabove. As can be seen from FIG. 2, the skin core 32 has a shape which corresponds to the shape defined by the outer wall 30.

To provide cooling features, the skin core 32 may be provided with a number of cut outs 36 for defining cooling passageways needed to increase convection. If desired, the skin core 32 may have its exterior and/or interior surfaces coated with a ceramic coating.

The casting system may also includes a metallic internal component 38 having a shape corresponding to the shape of the wall 30 and the skin core 32. The component 38 may be formed by any suitable metallic material known in the art.

Referring now to FIG. 3, and describing an arrangement outside the scope of claim 1, the casting system includes an outer wall 30 having a shape corresponding to the shape of an airfoil portion of the turbine engine component. As shown in the figure, a refractory metal core 32 having a shape corresponding to the shape of the airfoil portion is provided. The refractory metal core 32 may be formed from any of the materials listed hereinbefore. As can be seen from the figure, the core 32 may be formed by two sheets 40 and 42 of refractory based material joined together at two locations 44 and 46. Any suitable joining technique known in the art, such as welding, bonding, or mechanical joining may be used to join the sheets 40 and 42 together. In the system of FIG. 3, the internal component 38 may be omitted. If desired, each of the sheets 40 and 42 may have its internal and/or exterior surfaces coated with a ceramic coating.

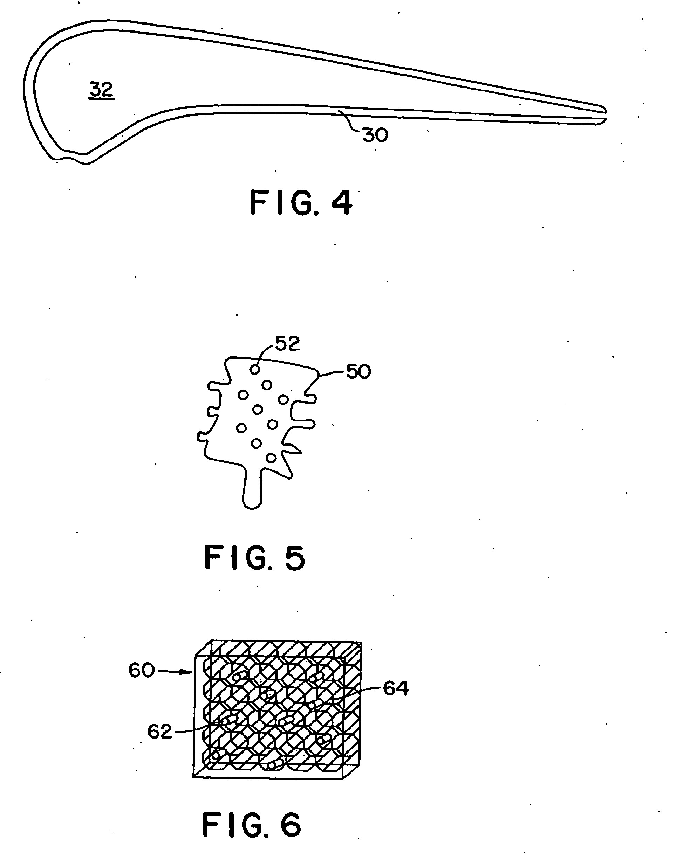

Referring now to FIG. 4, and describing an arrangement outside the scope of claim 1, in this arrangement, the casting system includes an outer wall 30 shaped in the form of an airfoil component and a refractory metal core 32 having a shape corresponding to the shape of the outer wall. The core 32, as before, may be made from the refractory materials listed hereinbefore. The core 32 in this embodiment is formed from a solid forging of refractory metal. If desired, the core 32 may have a ceramic coating on its exterior surfaces.

Referring now to FIG. 5, and describing an arrangement outside the scope of claim 1, it is possible to replace thick ceramic cores in casting systems with thin wall refractory metal balloon or pillow structures 50. The structures 50 may be formed from any of the refractory metal materials described hereinbefore. The structures 50 may be formed by either deep drawing or expanding the walls under high pressure gas to conform to the internal cavity of a die. The shape may be supported by either pressurized gas or back filled with an inert material such as pressurized inert gas, sand, or ceramic powder. As long as sufficient surface of the structure 50 is accessible from the outside after the casting process is over (such as bottom of a blade), the compressed gas or filler material can be let out, leaving only thin skin to be leached. If desired, the structures 50 may be provided with a plurality of dimples and/or protrusions 52.

In accordance with the invention it is also possible to create honeycomb shaped refractory metal core structures 60 by wrapping thin foils of refractory metal around a honeycomb or foam as shown in FIG. 6 and shaping it by pressing it between dies with internal cavities. This is equivalent to forming corrugated cardboard packing material using refractory metal sheets. Each structure has a plurality of dimples 62 internally supported by ribs or honeycomb 64. Use of this approach is likely to save core leaching time. Once the volume of the core material is less than the core cavity, it is also possible to oxidize the core material, in spite of volumetric expansion of the oxide compared to the parent metal.

## Claims

1. A refractory metal core (60) for use in a casting system comprising a honeycomb structure formed from a refractory sheet material, said honeycomb structure having a plurality of dimples (62) internally supported by ribs (64).

## Patentansprüche

1. Schwerschmelzender Metallkern (60) zur Verwendung in einem Gießsystem, aufweisend eine aus einem schwerschmelzenden Flachmaterial hergestellte Wabenstruktur, wobei die Wabenstruktur eine Mehrzahl von durch Rippen (64) innengestützten Vertiefungen (62) hat.

## Revendications

1. Noyau métallique réfractaire (60) destiné à être utilisé dans un système de coulée, comprenant une structure en nid d'abeille formée à partir d'un matériau en feuille réfractaire, ladite structure en nid d'abeille possédant une pluralité de dépressions (62) supportées intérieurement par des nervures (64).
